# EUROPEAN PATENT SPECIFICATION

(11) **EP 3 988 391 B1**
(45) Date of publication and mention of the grant of the patent: **03.04.2024**
(21) Application number: 21202827.8
(22) Date of filing: 15.10.2021
(51) Int. Cl.: B60P 7/08

(54) **A MECHANICAL WINCH WITH A MOVABLE SPROCKET**
EINE MECHANISCHE SEILWINDE MIT EINEM BEWEGLICHEN ZAHNRAD
UN TREUIL MÉCANIQUE AVEC UN PIGNON MOBILE

(30) Priority: 21.10.2020 SI 202000195
(43) Date of publication of application: 27.04.2022
(73) Proprietor: Pisek - Vitli Krpan, d.o.o., 3240 Smarje pri Jelsah (SI)
(72) Inventor: Pisek, Franc, 3240 Smarje pri Jelsah (SI)
(74) Representative: Patentni Biro AF d.o.o.

(56) References cited:
- FR-E- 16 599
- SI-A- 21 184
- US-A- 555 703
- US-A- 616 198

## Description

### Field of the invention

The present invention belongs to the field of forestry winches, more precisely to the field of constructional details of winches, particularly related to the drive of a winch drum. The invention relates to a mechanical winch with a movable sprocket and a mechanical assembly that enables axial movement of the drive sprocket.

### Background of the invention and the technical problem

Winches are used for pulling a load using a rope, which is wound of a drum and thus pulls the load closer to the winch. The assembly for rotation of the drum usually comprises a main axis, on which the drum with a brake is installed, said drum being connected via a clutch to a sprocket, which during winding of the rope onto the drum presses on the clutch in order to transfer the rotational moment to the drum. During use of a winch a situation may occur, in which safe and reliable termination or suspension of pulling of a load via winding a wire rope on a winch drum is required. When termination of winding is activated with an automatic brake, the sprocket has to move away (shift) from the clutch and the drum as soon as possible so as to prevent unwanted sliding and heating of the clutch, which affects the pulling force of the winch and shortens the lifetime of the clutch.

In most solutions, the said shift of the sprocket is achieved by the movement of the drum. A problem can occur in case termination of pulling (winding) is activated with the automatic brake. Namely, the drum tends to unwind, but this is prevented by the automatic brake that causes the brake belt to move closer to the drum thus blocking the latter. Because the reaction time of the automatic brake is short, the winding drum does not move away from the clutch and the sprocket in a timely manner. When the automatic brake is released, the drum moves, but in practice the automatic brake is activated for longer periods during which the clutch can slide and consequently (over)heat. In subsequent uses of the forestry winch its pulling force is smaller due to said overheating, while the lifespan of the clutch is shortened as already mentioned above.

The technical problem, which is solved by the present invention, is thus a constructional solution of a mechanical assembly that will axially shift the sprocket to and from the clutch and the winding drum of the winch in the moment of activation of the automatic brake. The solution has to allow reliable shifting to and from the clutch when the winding of the pulling rope is stopped.

### Prior art

Slovenian patent SI21184 describes an axially movable sprocket of a hydraulic forestry winch, characterized in that the main axis is provided with a drum with an automatic brake, wherein the drum for winding and unwinding of a wire rope is through a clutch slidingly connected to the axially movable sprocket. The latter is connected to a hydraulic cylinder and is, in the moment when the hydraulic cylinder receives a signal for termination of drum rotation, moved from the clutch by movement of the hydraulic cylinder. This solution is based on hydraulics and hydraulic cylinders, which ensure that the sprocket is moved (shifted), which essentially differs from the winch according to the present invention which does not use hydraulics for its operation.

Mechanical solutions of an axially movable sprocket are achieved in various manners, mostly in connection with lifting mechanism or specially shaped additional shafts. The solution described in patent SE521086, for example, relates to a movable part of the clutch and not of the sprocket. This document discloses a winch drum having a hollow drive shaft and a first clutch comprising a first and a second part, wherein the first part of the clutch can axially move along the drive shaft. This is enabled with a clutch shaft installed inside the hollow drive shaft, as the clutch shaft can move inside the hollow drive shaft using a special mechanism. Because the clutch shaft is connected to the first part of the clutch, the latter can axially move and comes in and out of contact with the second part of the clutch. Said mechanism differs from the present invention in its construction.

Patent DE2607978 describes a movable sprocket, movement of which is achieved in a different manner. The drum of the winch has an axis with a part provided with spirally shaped grooves along which the sprocket moves and two movement restrictors that prevent the sprocket to move farther along the axis than necessary.

Patent FR2614962 describes a winch and a gearbox for the winch, respectively, said gearbox having several sprockets, among which at least one is movable with a lifting mechanism. The latter operates in a manner that significantly differs from the present invention.

### Description of the solution to the technical problem

The present invention differs from the above-mentioned known solutions in that the movement of the sprocket is enabled with a specially designed mechanical assembly, preferably a system of levers that is connected to the mechanism for activating pulling in mechanical winches.

The invention is based on a mechanical winch, operation and control of which is achieved with a mechanism usually having a first rope (usually green) for activation of pulling and a second rope (usually red) for releasing (deactivation) of a brake, i.e., a brake for proportional release. When the green rope for activation of pulling is pulled, the brake is automatically activated, which ensures that the brake belt slides along the drum but does not brake, as the drum is rotating in the direction of winding. The drum is thus rotating and the pulling rope is winding on it, consequently drawing the load towards the winch. When the first rope for activation of pulling is released, while the load is still attached, the drum tends to rotate in the direction of rope unwinding, which is prevented by the activated automatic brake. Therefore, the drum does not rotate and the rope is not winding anymore, thus holding the load still.

The technical problem is solved as defined in the independent claims 1 and 9, wherein preferred embodiments of the solution to the technical problem are described in the dependent claims.

Onto the main axis of the winch the drum for winding a pulling rope and a brake is installed, said drum being slidingly connected via a clutch with the sprocket, which is axially movable. The essence of the mechanical winch is in that the axial movement of the drive sprocket is enabled with a mechanical assembly, which is designed as a lever system comprising at least:
- a pulling lever, which is on its top equipped with a pulley arranged to receive a green rope for activation of pulling,
- a first connective lever on the side of a drum, said lever having two ends, wherein the first end is connected to the pulling lever and the second end is connected with a connective shaft, so that movement of the pulling lever can be transferred to the connective shaft,
- the connective shaft on both ends provided with a bearing, wherein the connective shaft is installed under the drum and the second end of the shaft is connected to a second connective lever,
- the second connective lever, which is located at the side of a sprocket and transfers movement from the pulling lever via the first connective lever and the connective shaft to an activation mechanism,
- the activation mechanism, comprising a handle for connection with the second connective lever, two clutches arranged to rotate around the axis, pinions provided between the clutches, said pinions allowing the axial movement of the sprocket towards the clutches and the drum, so that rotation moment can be transferred to the drum, and
- a spring installed between the sprocket and the drum, the said spring being arranged to compress upon activation of pulling and upon releasing the green rope the spring is arranged to release the energy and to push the sprocket away from the drum and the clutch.

Connecting levers and the shaft may have any suitable shape, wherein mountings or connections between individual elements of the said lever system may be any suitable for transfer of the movement of the pulling lever to the activation mechanism. Preferably, the mountings are fulcrums (pivots) with bolts, while the connective shaft has two bearings, bushings, hinges or similar elements. The connective shaft may be made from one or several pieces, preferably from two or three pieces, so that on one side the shaft is provided with an attached, preferably welded, additional ear for connection to the first and/or second connective lever. The multi-piece connective shaft enables easier installation of the lever system into the mechanical winch. As described above, the connective shaft may be installed under the drum or it can be provided in the axis of the drum if the latter is hollow or otherwise ensures installation of the connective shaft, so that on the other side the shaft can be connected to the second connective lever. The spring may be a compression or a disc spring, preferably it is a compression spring.

The present invention operates in the following way: when the green rope for activation of pulling is pulled, the pulling lever is rotated and this movement is through the first connective lever, a three-part connective shaft, bearings and the second connective lever transferred to the back side of the winch, where the sprocket is installed. There, the movement is transferred through the activation mechanism to pinions, which rotate and thus create a space between them in order to bring sliding surfaces of the clutch close together between the sprocket and the drum. In this manner friction is increased and the load can be pulled towards the winch. When the green rope for activation of pulling is released, the automatic brake is activated in order to block movement of the drum. Because the sprocket has a smaller mass than the drum and because no radial force is acting on the sprocket, the latter can move away due to the action of the spring, thus creating a space between the drum, clutches and the sprocket. Due to this space the clutches do not slide and do not (over)heat. Therefore, the pulling force is much more constant in next use cycles, while the lifespan of clutches is increased. Due to the described improvement work with the mechanical winch with the axially movable sprocket is more ergonomic, as the force on the green rope for activation of pulling is decreased. Movement of the sprocket is due to its lower weight much easier than movement of the drum.

A possible alternative embodiment is that the mechanical assembly is based on implementation of a Bowden cable. In this case, instead of connective levers and the connective shaft with bearings the hollow main axis of the winch or below the drum a Bowden is installed, said Bowden being mounted on one side to the pulling lever and on the other side to the activation mechanism or the handle of the activation mechanism, respectively, so that movement of the pulling lever can be transferred via the Bowden to the activation mechanism, thus causing the sprocket to move towards the clutches and the drum, which activates rotation of the winch drum and consequently winding of the rope. Also in this embodiment, release of the green rope for activation of pulling results in the sprocket moving away from the clutches and the drum due to the provided spring.

The mechanical winch with the mechanical lever system for axial movement of the drive sprocket will be described in further details based on exemplary embodiments and figures, which show:
- Figure 1: An elevation view of the drum with the mechanical lever system from two sides
- Figure 2: Cross-section of the drum with the mechanical lever system

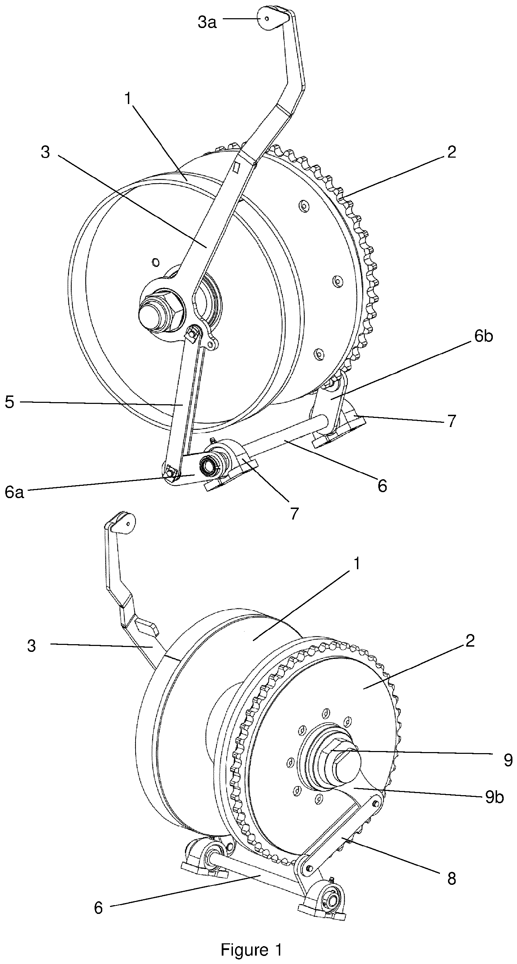

Figure 1 shows an elevation view of the drum with the mechanical assembly designed as a lever system that enables the axial movement of the drive sprocket, wherein the lever system comprises at least the following:
- a pulling lever 3, which is on its top equipped with a pulley 3a arranged to receive a green rope for activation of pulling,
- a first connective lever 5 on the side of a drum 1, said lever 5 having two ends, wherein the first end is connected to the pulling lever 3 and the second end is connected with a connective shaft 6, so that movement of the pulling lever 3 can be transferred to the connective shaft 6,
- the connective shaft 6 on both ends provided with a bearing 7, wherein the connective shaft 6 is installed under the drum 1 and the second end of the shaft 6 is connected to a second connective lever 8,
- the second connective lever 8, which is located at the side of a sprocket 2 and transfers movement from the pulling lever 3 via the first connective lever 5 and the connective shaft 6 to an activation mechanism 9,
- the activation mechanism 9, comprising a handle 9b for connection with the second connective lever 8, two clutches arranged to rotate around the axis, pinions provided between the clutches, said pinions allowing the axial movement of the sprocket 2 towards the clutches and the drum 1, so that rotation moment can be transferred to the drum 1, and
- a spring 10 installed between the sprocket 2 and the drum 1, the said spring being arranged to compress upon activation of pulling and upon releasing the green rope the spring is arranged to release the energy and to push the sprocket away from the drum and the clutch.

The connective shaft according to a possible embodiment is made from several parts, preferably from two or three parts, so that one end of the shaft is provided with an attached, preferably welded, additional ear 6a, 6b for connection to the first 5 and/or second connective lever 8. The spring 10 may be a compression or a disc spring, preferably a compression spring.

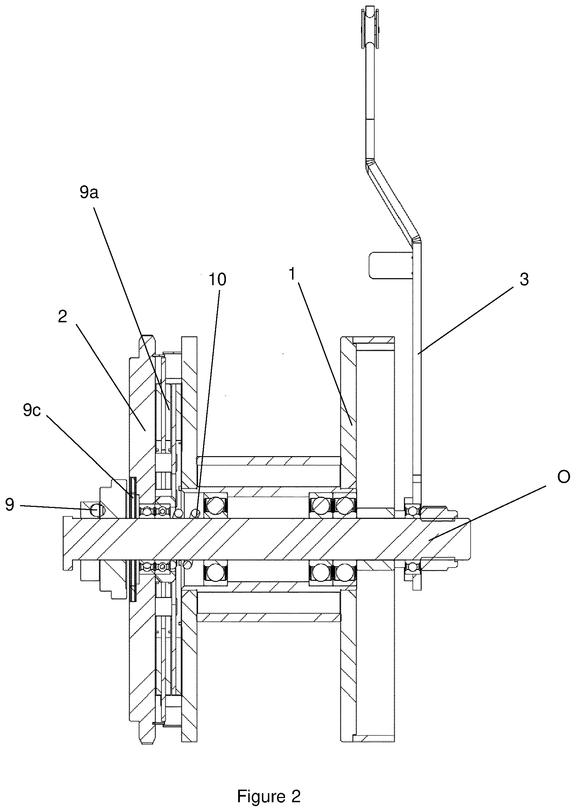

Figure 2 shows the axis O of the winch, on which the winding drum 1, clutches 9a, the sprocket 2 and the activation mechanism 9 are installed, wherein the position of the spring 10 between the drum 1 and the sprocket 2 is also visible. An axial bearing 9c is also shown, said bearing being installed between the activation mechanism and the sprocket as it ensures that the mechanism is rotated only for few degrees, while the sprocket is always rotating when the cardan shaft is turned on.

## Claims

1. A mechanical winch with a movable sprocket, having a main axis (O) of the winch onto which a drum (1) for winding a pulling rope with a brake is installed, said drum (1) being connected in a sliding manner with a sprocket (2) via a clutch (9a), wherein the sprocket (2) is axially movable, and
the movement of the sprocket (2) towards the clutch (9a) is ensured with a mechanical assembly that transfers movement of a pulling lever (3) connected with a rope for activation of pulling to pinions of an activation mechanism (9) comprising the clutch (9a),
**characterized in that** the mechanical assembly is designed as a system of levers comprising at least:
- the pulling lever (3), which is on its top equipped with a pulley (3a) arranged to receive the green rope for activation of pulling,
- a first connective lever (5) on the side of a drum (1), said lever (5) having two ends, wherein the first end is connected to the pulling lever (3) and the second end is connected with a connective shaft (6), so that movement of the pulling lever (3) can be transferred to the connective shaft (6),
- the connective shaft (6), wherein the second end of the shaft (6) is connected to a second connective lever (8),
- the second connective lever (8), which is located at the side of the sprocket (2) and transfers movement from the pulling lever (3) via the first connective lever (5) and the connective shaft (6) to the activation mechanism (9),
- the activation mechanism (9) comprising a handle (9b) for connection with the second connective lever (8), two clutches (9a) arranged to rotate around the axis, wherein pinions are provided between the clutches, said pinions allowing the axial movement of the sprocket (2) towards the clutches and the drum (1), so that rotation moment can be transferred to the drum (1), and
- a spring (10) installed between the sprocket (2) and the drum (1), the said spring being arranged to compress upon activation of pulling and upon releasing the green rope the spring is arranged to release the energy and to push the sprocket away from the drum and the clutch.

2. The mechanical winch according to claim 1, **characterized in that** the connective shaft (6) is made from one or several pieces.

3. The mechanical winch according to the preceding claim, **characterized in that** the connective shaft (6) is on both ends provided with one bearing (7), a bushing, a hinge or a similar element.

4. The mechanical winch according to claim 2 or claim 3 **characterized in that** the connective shaft (6) is at least on one end provided with an attached, preferably welded, additional ear (6a, 6b) for connection with the first and/or second connective lever (5, 8).

5. The mechanical winch according to any claim from 1 to 4, **characterized in that** the connective shaft (6) is installed below the drum (1) or in the hollow main axis (O) of the winch.

6. The mechanical winch according to any claim from 1 to 5, **characterized in that** the spring (10) is a compression or a disc spring, preferably a compression spring.

7. The mechanical winch according to any claim from 1 to 6, **characterized in that** the connective levers (5, 8) and the connective shaft (6) may have any suitable shape, while mounting or connections between the individual elements (3, 5, 6, 8, 9) of the said lever assembly may be any suitable connections arranged to transfer movement of the pulling lever (3) to the activation mechanism (9).

8. The mechanical winch according to the preceding claim, **characterized in that** the mountings are made as pivots with bolts, while the connective shaft (6) is on both ends provided with bearings (7), bushings, hinges or similar elements.

9. A mechanical winch with a movable sprocket, having a main axis (O) of the winch onto which a drum (1) for winding a pulling rope with a brake is installed, said drum (1) being connected in a sliding manner with a sprocket (2) via a clutch (9a), wherein the sprocket (2) is axially movable, and the movement of the sprocket (2) towards the clutch (9a) is ensured with a mechanical assembly that transfers movement of a pulling lever (3) connected with a rope for activation of pulling to pinions of an activation mechanism (9) comprising the clutch (9a), **characterized in that** the mechanical assembly is based on Bowden and comprises:
- a pulling lever (3), which is on its top equipped with a pulley arranged to receive a green rope for activation of pulling,
- a Bowden mounted to the pulling lever (3), wherein said Bowden transfers movement from the pulling lever (3) to the activation mechanism (9),
- the activation mechanism, comprising a handle (9b) for connection with the Bowden, two clutches (9a) arranged to rotate around the axis, pinions provided between the clutches, said pinions allowing the axial movement of the sprocket (2) towards the clutches and the drum (1), so that rotation moment can be transferred to the drum (1), and
- a spring (10) installed between the sprocket (2) and the drum (1), the said spring (10) being arranged to compress upon activation of pulling and upon releasing the green rope the spring is arranged to release the energy and to push the sprocket (2) away from the drum (1) and the clutch (9a).

## Patentansprüche

1. Mechanische Seilwinde mit einem beweglichen Zahnrad, aufweisend eine Hauptachse (O) der Seilwinde, auf die eine Trommel (1) zum Aufwickeln eines Zugseils mit einer Bremse montiert ist, wobei die Trommel (1) gleitend mit einem Zahnrad (2) über eine Kupplung (9a) verbunden ist, wobei das Zahnrad (2) axial beweglich ist, und
die Bewegung des (2) in Richtung der Kupplung (9a) durch eine mechanische Baugruppe gewährleistet wird, welche die Bewegung eines Zughebels (3) überträgt, der mit einem Seil zur Aktivierung des Ziehens zu Zahntrieben eines Aktivierungsmechanismus (9) verbunden ist, der die Kupplung (9a) umfasst,
**dadurch gekennzeichnet, dass** die mechanische Baugruppe als Hebelsystem ausgebildet ist, mindestens umfassend:
- den Zughebel (3), der an seiner Oberseite mit einer Rolle (3a) ausgestattet ist, die zur Aufnahme des grünen Seils zur Betätigung des Zuges angeordnet ist,
- einen ersten Verbindungshebel (5) auf der Seite einer Trommel (1), wobei der Hebel (5) zwei Enden aufweist, wobei das erste Ende mit dem Zughebel (3) und das zweite Ende mit einer Verbindungswelle verbunden ist (6), so dass die Bewegung des Zughebels (3) auf die Verbindungswelle (6) übertragen werden kann,
- die Verbindungswelle (6), wobei das zweite Ende der Welle (6) mit einem zweiten Verbindungshebel (8) verbunden ist,
- den zweiten Verbindungshebel (8), der sich seitlich am Zahnrad (2) befindet und die Bewegung vom Zughebel (3) über den ersten Verbindungshebel (5) und die Verbindungswelle (6) auf den Betätigungsmechanismus überträgt (9),
- den Aktivierungsmechanismus (9), umfassend einen Griff (9b) zur Verbindung mit dem zweiten Verbindungshebel (8), wobei zwei Kupplungen (9a) angeordnet sind, um sich um die Achse herum zu drehen, wobei zwischen den Kupplungen Zahntriebe vorgesehen sind, wobei die Zahntriebe die axiale Bewegung des Zahnrads (2) in Richtung der Kupplungen und der Trommel (1) ermöglichen, damit das Drehmoment auf die Trommel (1) übertragen werden kann, und
- eine Feder (10), die zwischen dem Zahnrad (2) und der Trommel (1) installiert ist, wobei die Feder angeordnet ist, um sich bei Aktivierung des Ziehens zusammenzudrücken und beim Loslassen des grünen Seils die Feder angeordnet ist, um die Energie freizusetzen und das Zahnrad von der Trommel und der Kupplung wegzudrücken.

2. Mechanische Seilwinde nach Anspruch 1, **dadurch gekennzeichnet, dass** die Verbindungswelle (6) aus einem oder mehreren Teilen besteht.

3. Mechanische Seilwinde nach dem vorstehenden Anspruch, **dadurch gekennzeichnet, dass** die Verbindungswelle (6) an beiden Enden mit einem Lager (7), einer Buchse, einem Scharnier oder einem ähnlichen Element versehen ist.

4. Mechanische Seilwinde nach Anspruch 2 oder Anspruch 3, **dadurch gekennzeichnet, dass** die Verbindungswelle (6) mindestens an einem Ende mit einem angebrachten, vorzugsweise angeschweißten zusätzlichen Ohr (6a, 6b) zur Verbindung mit dem ersten und/oder zweiten Verbindungshebel (5, 8) versehen ist.

5. Mechanische Seilwinde nach einem der Ansprüche 1 bis 4, **dadurch gekennzeichnet, dass** die Verbindungswelle (6) unterhalb der Trommel (1) oder in der hohlen Hauptachse (O) der Seilwinde eingebaut ist.

6. Mechanische Seilwinde nach einem der Ansprüche 1 bis 5, **dadurch gekennzeichnet, dass** die Feder (10) eine Druck- oder Tellerfeder, vorzugsweise eine Druckfeder, ist.

7. Mechanische Seilwinde nach einem der Ansprüche 1 bis 6, **dadurch gekennzeichnet, dass** die Verbindungshebel (5, 8) und die Verbindungswelle (6) jede geeignete Form aufweisen können, während die Halterung oder Verbindungen zwischen den einzelnen Elementen (3, 5, 6, 8, 9) der Hebelanordnung beliebige geeignete Verbindungen sein können, die angeordnet sind, um die Bewegung des Zughebels (3) auf den Aktivierungsmechanismus (9) zu übertragen.

8. Mechanische Seilwinde nach dem vorstehenden Anspruch, **dadurch gekennzeichnet, dass** die Halterungen als Drehzapfen mit Bolzen hergestellt sind, während die Verbindungswelle (6) an beiden Enden mit Lagern (7), Buchsen, Scharnieren oder ähnlichen Elementen versehen ist.

9. Mechanische Seilwinde mit einem beweglichen Zahnrad, umfassend eine Hauptachse (O) der Seilwinde, auf die eine Trommel (1) zum Aufwickeln eines Zugseils mit einer Bremse montiert ist, wobei die Trommel (1) gleitend mit einem Zahnrad (2) über eine Kupplung (9a) verbunden ist, wobei das Zahnrad (2) axial beweglich ist und die Bewegung des Zahnrads (2) in Richtung der Kupplung (9a) mit einer mechanischen Baugruppe gewährleistet wird, welche die Bewegung eines Zughebels (3) überträgt, der mit einem Seil zur Aktivierung des Ziehens zu Zahntrieben eines Aktivierungsmechanismus (9), der die Kupplung (9a) umfasst, verbunden ist, **dadurch gekennzeichnet, dass** die mechanische Baugruppe auf dem Bowdenzug basiert und Folgendes umfasst:
- einen Zughebel (3), der an seiner Oberseite mit einer Rolle ausgestattet ist, die zur Aufnahme eines grünen Seils zur Betätigung des Zuges angeordnet ist,
- einen am Zughebel (3) montierten Bowdenzug, wobei der Bowdenzug die Bewegung vom Zughebel (3) auf den Aktivierungsmechanismus (9) überträgt,
- wobei der Aktivierungsmechanismus einen Griff (9b) zur Verbindung mit dem Bowdenzug umfasst, wobei zwei Kupplungen (9a) angeordnet sind, um sich um die Achse herum zu drehen, zwischen den Kupplungen Zahntriebe vorgesehen sind, wobei die Zahntriebe die axiale Bewegung des Zahnrads (2) in Richtung der Kupplungen und der Trommel (1) ermöglichen, damit das Drehmoment auf die Trommel (1) übertragen werden kann, und
- eine Feder (10), die zwischen dem Zahnrad (2) und der Trommel (1) installiert ist, wobei die Feder (10) angeordnet ist, um sich bei Aktivierung des Ziehens zusammenzudrücken und beim Loslassen des grünen Seils die Feder angeordnet ist, um die Energie freizusetzen und das Zahnrad (2) von der Trommel (1) und der Kupplung (9a) wegzudrücken.

## Revendications

1. Un treuil mécanique avec pignon mobile, ledit treuil ayant un axe principal (O) sur lequel un tambour (1) destiné à l'enroulement d'un câble de traction doté d'un frein est installé, ledit tambour (1) étant raccordé de façon coulissante à un pignon (2) par le biais d'un embrayage (9a), où le pignon (2) est axialement mobile, et
le mouvement du pignon (2) en direction de l'embrayage (9a) est assuré par un assemblage mécanique qui transfère le mouvement d'un levier de traction (3) raccordé à un câble pour l'activation de la traction aux roues dentées d'un mécanisme d'activation (9) comprenant l'embrayage (9a),
**caractérisé par le fait que** l'assemblage mécanique est conçu comme un système de leviers comprenant au moins :
- le levier de traction (3), dont le sommet est doté d'une poulie (3a) disposée de façon à recevoir le câble vert pour l'activation de la traction,
- un premier levier de renvoi (5) sur le côté du tambour (1), ledit levier (5) possédant deux extrémités, où la première extrémité est raccordée au levier de traction (3) et la seconde extrémité est raccordée à un arbre de renvoi (6), de façon à ce que le mouvement du levier de traction (3) puisse être transféré à l'arbre de renvoi (6),
- l'arbre de renvoi (6), sur lequel la seconde extrémité de l'arbre (6) est raccordée à un deuxième levier de renvoi (8),
- le deuxième levier de renvoi (8), qui se situe à côté du pignon (2) et transfère le mouvement provenant du levier de traction (3) via le premier levier de renvoi (5) et l'arbre de renvoi (6) au mécanisme d'activation (9),
- le mécanisme d'activation (9) comprenant une poignée (9b) pour la connexion au second levier de renvoi (8), deux embrayages (9a) disposés de façon à tourner autour de l'axe, où des roues dentées sont disposées entre les embrayages, lesdites roues dentées permettant le mouvement axial du pignon (2) vers les embrayages et le tambour (1), pour que le moment de rotation puisse être transféré au tambour (1), et
- un ressort (10) installé entre le pignon (2) et le tambour (1), ledit ressort étant disposé de façon à se comprimer lors de l'activation de la traction, et lors du relâchement du câble vert, le ressort est conçu pour libérer l'énergie et pour pousser le pignon dans la direction opposée au tambour et à l'embrayage.

2. Le treuil mécanique selon la revendication 1, **caractérisé par le fait que** l'arbre de renvoi (6) est constitué d'une ou de plusieurs pièces.

3. Le treuil mécanique selon la revendication précédente, **caractérisé par le fait que** l'arbre de renvoi (6) est pourvu à ses deux extrémités d'un roulement (7), d'une bague, d'une charnière ou d'un élément similaire.

4. Le treuil mécanique selon la revendication 2 ou la revendication 3, **caractérisé par le fait que** l'arbre de renvoi (6) est à au moins une de ses extrémités pourvu d'une oreille supplémentaire (6a, 6b) fixée, de préférence soudée, pour le raccordement au premier et/ou au second levier de renvoi (5, 8).

5. Le treuil mécanique selon l'une quelconque des revendications 1 à 4, **caractérisé par le fait que** l'arbre de renvoi (6) est installé sous le tambour (1) ou dans l'axe principal (O) creux du treuil.

6. Le treuil mécanique selon l'une quelconque des revendications 1 à 5, **caractérisé par le fait que** le ressort (10) est un ressort de compression ou un ressort disque, de préférence un ressort de compression.

7. Le treuil mécanique selon l'une quelconque des revendications 1 à 6, **caractérisé en ce que** les leviers de renvoi (5, 8) et l'arbre de renvoi (6) peuvent avoir toute forme appropriée, tandis que le montage ou les raccordements entre les éléments individuels (3, 5, 6, 8, 9) dudit assemblage de leviers peuvent être n'importe quels raccordements appropriés conçus de façon à transférer le mouvement du levier de traction (3) au mécanisme d'activation (9).

8. Le treuil mécanique selon la revendication précédente, **caractérisé par le fait que** les montages sont conçus comme des pivots avec boulons, tandis que l'arbre de renvoi (6) est pourvu à ses deux extrémités de roulements (7), bagues, charnières ou éléments similaires.

9. Un treuil mécanique avec pignon mobile, ledit treuil ayant un axe principal (O) sur lequel un tambour (1) destiné à l'enroulement d'un câble de traction doté d'un frein est installé, ledit tambour (1) étant raccordé de façon coulissante à un pignon (2) par le biais d'un embrayage (9a), où le pignon (2) est axialement mobile, et le mouvement du pignon (2) vers l'embrayage (9a) est assuré par un assemblage mécanique qui transfère le mouvement d'un levier de traction (3) raccordé à un câble pour l'activation de la traction aux roues dentées d'un mécanisme d'activation (9) comprenant l'embrayage (9a), **caractérisé par le fait que** l'assemblage mécanique est basé sur Bowden et comprend :
- un levier de traction (3), qui est pourvu à son sommet d'une poulie disposée de façon à recevoir un câble vert pour l'activation de la traction,
- un Bowden installé sur le levier de traction (3), où ledit Bowden transfère le mouvement depuis le levier de traction (3) vers le mécanisme d'activation (9),
- le mécanisme d'activation, comprenant une poignée (9b) pour le raccordement au Bowden, deux embrayages (9a) conçus de façon à tourner autour de l'axe, des roues dentées disposées entre les embrayages, lesdites roues dentées permettant le mouvement axial du pignon (2) vers les embrayages et le tambour (1), pour que le moment de rotation puisse être transféré au tambour (1), et
- un ressort (10) installé entre le pignon (2) et le tambour (1), ledit ressort (10) étant disposé de façon à se comprimer lors de l'activation de la traction, et lors du relâchement du câble vert, le ressort est conçu pour libérer l'énergie et pousser le pignon (2) dans la direction opposée au tambour (1) et à l'embrayage (9a).
